# EUROPÄISCHE PATENTSCHRIFT

(11) **EP 2 522 556 B1**
(45) Veröffentlichungstag und Bekanntmachung des Hinweises auf die Patenterteilung: **28.05.2025**
(21) Anmeldenummer: 12164082.5
(22) Anmeldetag: 13.04.2012
(51) Int. Cl.: B60S 5/00, G07C 5/00, G07C 5/08

(54) **Verfahren zur Verwaltung von Flurförderzeugen und Flurförderzeug**
Method for managing industrial trucks and industrial truck
Procédé de gestion de chariots de manutention ainsi que chariot de manutention

(30) Priorität: 13.05.2011 DE 102011101505
(43) Veröffentlichungstag der Anmeldung: 14.11.2012
(73) Patentinhaber: STILL GmbH, 22113 Hamburg (DE)
(72) Erfinder: Halt, Bernd Ulrich, 22113 Oststeinbek (DE)
(74) Vertreter: Patentship Patentanwaltgesellschaft

(56) Entgegenhaltungen:
- US-A1- 2002 016 655
- US-A1- 2005 021 197
- US-A1- 2008 154 712
- US-A1- 2010 179 844

## Beschreibung

Die Erfindung betrifft ein Verfahren zur Verwaltung von Flurförderzeugen. Insbesondere betrifft die Erfindung ein Verfahren zur Verwaltung von Flurförderzeugen, wobei das Flurförderzeug einen Steuerungsrechner aufweist, der über Datenübertragungsmittel an einen zentralen Servicerechner Daten übertragen kann, bei dem Fehlfunktionen des Flurförderzeugs durch den Steuerungsrechner erfasst werden.

Flurförderzeuge werden in Lagerbetrieben und/oder in Produktionsbetrieben, vor allem in der industriellen Serienfertigung, in großer Anzahl eingesetzt, um den Transport der angelieferten Waren, Rohstoffe und Vorprodukte von der Warenannahme bis zum eigentlichen Produktionsort, etwa einem Fließband, durchzuführen. Bei der Verwaltung dieser Flotten aus Flurförderzeugen, die zumeist aus einer großen Anzahl von beispielsweise durch je einen Fahrer geführten Gabelstaplern bestehen können, stellen sich typische Aufgaben, die im Rahmen eines Flottenmanagements gelöst werden müssen. So müssen Serviceintervalle sowie im Bedarfsfall erforderliche Reparaturarbeiten verwaltet werden. Nach dem bisherigen Stand der Technik wird von einem Inhaber bzw. einem Kunden als Anwender eines Flurförderzeugs eine Störung bzw. ein Fehler beurteilt und eine Art Störungsmeldung insofern an die zuständige Serviceorganisation übertragen, als auf bekanntem Wege der Reparaturbedarf gemeldet wird, etwa telefonisch oder per Fax. Wenn auf diese Art und Weise eine Reparaturanforderung bzw. eine Serviceanforderung zugeht, erhält die Serviceorganisation keine oder nur sehr beschränkte Handlungsanweisungen oder Hinweise auf die Störung oder den Fehler, der bei dem Flurförderzeugen eingetreten ist und die Fehlerursachen. Die Folge ist, dass ein Servicetechniker oft erst an dem defekten Flurförderzeug mit den gegebenen Diagnosemöglichkeiten, insbesondere entsprechender Diagnosesoftware, und durch die Abfrage von Fehlerspeichern, die Fehlerursache ermitteln kann und gegebenenfalls defekte Bauteile identifizieren kann. Dies hat jedoch zur Folge, dass in vielen Fällen ein Servicetechniker ein zweites Mal anfahren muss, da das entsprechende Bauteil nicht von ihm mitgeführt wird. Bei der Vielzahl möglicher Varianten und der großen Anzahl von Baujahren von Flurförderzeugen, die sich gleichzeitig in Betrieb befinden, ist es nur für wenige sehr gängige Bauteile möglich, diese vorsorglich mitzuführen.

Bekannt ist bei Flurförderzeugen für Diagnosezwecke sowie für Servicezwecke die drahtlose Übertragung von Daten von und zu einem Flurförderzeug.

Die US 2005/0021197 A1 offenbart ein Verfahren zur Verwaltung von Fahrzeugen, wobei das Fahrzeug einen Steuerungsrechner aufweist, der über Datenübertragungsmittel an einen zentralen Servicerechner Daten übertragen kann. Von dem Steuerungsrechner im Fahrzeug werden Fehlfunktionen des Fahrzeugs erfasst und von den Fehlfunktionen entsprechenden Fehlercodes erzeugt. Die Fehlercodes werden über die Datenübertragungsmittel an den zentralen Servicerechner übertragen. Auf dem zentralen Servicerechner werden Handlungsanweisungen für den Service und die Reparatur des Fahrzeugs und/oder Informationen über benötigte Ersatzteile erzeugt.

Die US 2010/0179844 A1 offenbart ein Verfahren zur Verwaltung von Flurförderzeugen, wobei das Flurförderzeug einen Steuerungsrechner aufweist, der über Datenübertragungsmittelan einen zentralen Servicerechner Daten übertragen kann. Von dem Steuerungsrechner im Flurförderzeug werden Fehlfunktionen des Fahrzeugs erfasst und von den Fehlfunktionen entsprechenden Fehlercodes erzeugt. Die Fehlercodes werden über Datenübertragungsmittel an den zentralen Servicerechner übertragen. Der zentrale Servicerechner steht mit einer Datenbank in Verbindung, in der Handlungsanweisungen für den Service und die Reparatur des Flurförderzeugs und/oder Informationen über benötigte Ersatzteile abgespeichert sind. Es können entsprechende Handlungsanweisungen auf ein Display des Flurförderzeugs übertragen werden oder ein Servicetechniker kann von der Datenbank entsprechende Handlungsanweisungen abrufen, um die Reparatur des Flurförderzeugs zu planen.

Die US 2002/0016655 A1 offenbart ein Verfahren zum Bereitstellen von Fahrzeuginformationen und/oder Fahrzeugwartungsinformationen, bei dem mehrere Computer auf eine Datenbank eines Zentralrechners zugreifen können, wobei in der Datenbank des Zentralrechners Handlungsanweisungen für den Service oder die Reparatur des Fahrzeugs abgespeichert sind. Ein Benutzer kann über einen Rechner einen Zugang zu dem Zentralrechner herstellen, wobei nach der Eingabe eines Fahrzeugfehlers durch den Benutzer von dem Zentralrechner Handlungsanweisungen erzeugt werden und diese Handlungsanweisungen auf den Rechner des Benutzers übertragen werden.

Der vorliegenden Erfindung liegt daher die Aufgabe zugrunde, ein Verfahren zur Fahrzeugverwaltung von Flurförderzeugen zur Verfügung zu stellen, mit dem die Behebung von Fehlern und die Reparatur von Schäden auf effiziente Art und Weise sowie kostengünstig durchgeführt werden kann.

Diese Aufgabe wird durch ein Verfahren zur Fahrzeugverwaltung von Flurförderzeugen mit den Merkmalen des unabhängigen Anspruchs 1 sowie durch ein System umfassend ein Flurförderzeug und einen zentralen Servicerechner mit den Merkmalen des Anspruchs 9 gelöst. Vorteilhafte Ausgestaltungen werden durch die Unteransprüche angegeben.

Die Aufgabe wird gelöst durch ein Verfahren zur Aktualisierung von Handlungsanweisungen für den Service und die Reparatur eines Flurförderzeugs, wobei das Flurförderzeug einen Steuerungsrechner aufweist, der über Datenübertragungsmittel an einen zentralen Servicerechner Daten übertragen kann, wobei das Verfahren die folgenden Schritte aufweist:
- Erfassen von Fehlfunktionen des Flurförderzeugs durch den Steuerungsrechner,
- Erzeugen von den Fehlfunktionen entsprechenden Fehlercodes durch den Steuerungsrechner,
- Übertragen der Fehlercodes über die Datenübertragungsmittel an den zentralen Servicerechner,
- Erzeugen von Handlungsanweisungen für den Service und die Reparatur des Flurförderzeugs und/oder Informationen über benötigte Ersatzteile durch den zentralen Servicerechner, wobei für den Service und die Reparatur des Flurförderzeugs von der Software auf dem zentralen Servicerechner die Handlungsanweisungen zur Verfügung gestellt werden, und
- _ Aktualisieren der Handlungsanweisungen auf dem zentralen Servicerechner aus Erfahrungen mit vorhergehenden Reparaturen, von Servicetechniker erstellten Berichten, wobei in vorgegebenen elektronischen Formularen, Serviceberichten oder auf sonstige Art und Weise Rückmeldungen durch die Servicetechniker erfolgen und durch die Software auf dem zentralen Servicerechner automatisiert verarbeitet werden, und wobei über eine Webapplikation dem Anwender des Flurförderzeugs Informationen über eine Reparaturzeitdauer und einen möglichen Reparaturtermin zur Verfügung gestellt werden, wobei der Servicerechner anhand einer übertragenen oder ermittelten Seriennummer des Flurförderzeugs ein zugehöriges Ersatzteilverzeichnis auswählt, und wobei der Servicerechner für mit einer ermittelten wahrscheinlichsten Fehlerursache korrespondierenden Ersatzteile einer Auslagerung dieser Ersatzteile aus einem Ersatzteillager initiiert.

Erfindungsgemäß können dadurch die Fehlercodes auf dem zentralen Servicerechner analysiert werden und indem ein erforderliches Ersatzteil bestimmt wird bzw. eine Auswahl aus mehreren potentiellen möglichen erforderlichen Ersatzteilen durchgeführt wird, werden unnötige Fahrten eines Servicetechnikers vermieden, da der Servicetechniker dann im Regelfall alle erforderlichen Teile bereits bei der ersten Anfahrt für eine Reparatur des Flurförderzeugs mit sich führt. Dabei kann die Auswahl der Ersatzteile auf dem zentralen Servicerechner anhand von Datenbanken erfolgen bzw. Verzeichnissen, die in einer Software des Servicerechners hinterlegt sind und automatisch erfolgen. Dadurch ist es auch leicht möglich, die Software auf dem zentralen Servicerechner zu pflegen und stets aktuell zu halten, so dass immer die aktuellen Ersatzteile ausgewählt werden. Ebenso werden vorteilhaft für den Service und die Reparatur des Flurförderzeugs von der Software auf dem zentralen Servicerechner Handlungsanweisungen, insbesondere die den Fehlercodes zugeordneten Teile des Reparaturhandbuchs oder Reparaturhinweise, zur Verfügung gestellt. Diese lassen sich stets aktuell halten und bei jeder Reparatur wird nach den neuesten Handlungsanweisungen vorgegangen. Insbesondere ist es möglich, aus Erfahrungen mit vorhergehenden Reparaturen, von Servicetechniker erstellten Berichten usw. die Handlungsanweisungen auf dem zentralen Servicerechner zu aktualisieren im Sinne eines Expertensystems. Dies kann beispielsweise geschehen, indem in vorgegebenen elektronischen Formularen, Serviceberichten oder auf sonstige vorgegebene Art und Weise Rückmeldungen durch die Servicetechniker erfolgen und von der Software verarbeitet werden, insbesondere in einem Regelwerk für die Beurteilung der Fehlercodes berücksichtigt werden. Dadurch entsteht ein selbstlernendes System. Insbesondere ist es vorteilhaft, die Fehlercodes durch die Software auf dem zentralen Servicerechner automatisiert zu verarbeiten. Dadurch stehen diese nicht nur als lesbare Daten für einen Benutzer an dem zentralen Servicerechner zur Verfügung, sondern starten automatisiert einen Arbeitsablaufablauf oder Workflow. Die Analyse der Fehlercodes erfolgt dabei mit regelbasierten Programmen auf dem zentralen Servicerechner. Dabei können Lösungsbäume mit Eintrittswahrscheinlichkeiten gebildet werden zur Beurteilung, welche Regeln auf einen Fehlercode zutreffen. Vorteilhaft können durch die Erfindung die Betriebskosten gesenkt werden, insbesondere indem unnötige Leerfahrten zur Ermittlung der Fehlerursache von Servicetechniker vermieden werden. Zudem wird durch die automatische Fehlermeldung und die erzeugten Handlungsanweisungen die Verfügbarkeit des Flurförderzeugs durch eine schnelle und zielgerichtete Reparatur erhöht. Indem der gesamte Ablauf von der Meldung eines Fehlercodes über einen Arbeitsablauf gesteuert wird, der dritten Personen, insbesondere allen Beteiligten, als Darstellung zur Verfügung gestellt werden kann, ist es auch vorteilhaft auf einfache Weise möglich, die Verfügbarkeit des Flurförderzeugs bzw. die Ausfallzeiten bis zur Erledigungsmeldung einer Reparatur zu erfassen. Die Darstellung an dritte Personen kann zusätzlich oder durch Statusmeldungen erfolgen. Durch das vollautomatische Starten bzw. die vollautomatische Überwachung des gesamten Vorgangs in dem zentralen Servicerechner ist vorteilhaft auch in einem Mehrschichtbetrieb der Flurförderzeuge ohne erheblichen Mehraufwand ein schneller Serviceeinsatz möglich, da ein Reparaturauftrag zum Beispiel auch beispielsweise während einer Nachtzeit gestartet werden kann, ohne dass ein entsprechender Bereitschaftsdienst auf der Seite des Serviceteams eingerichtet sein muss. Durch die Rückmeldungen mittels von Serviceberichten nach erfolgter Reparatur und einen Abgleich mit den Handlungsanweisungen, die die Software auf dem zentralen Servicerechner zur Verfügung stellt, ist es auch möglich, durch einen Soll-Ist-Vergleich die Qualität der Handlungsanweisungen zu überprüfen und zu verbessern.

In vorteilhafte Ausgestaltung des erfindungsgemäßen Verfahrens erfasst der Steuerungsrechner zusätzlich Messwerte des Flurförderzeugs und überträgt diese an den Servicerechner, insbesondere mit den Fehlercodes zusammenhängende Messwerte und/oder Messwerte von den Fehlercodes zugeordneten Fahrzeugkomponenten.

Durch die Kombination des Fehlercodes mit korrespondierenden Messwerten ist eine genauere Beurteilung anhand von Regeln möglich und kann insbesondere ein lernendes Expertensystem generiert werden.

Vorteilhaft umfassen die Handlungsanweisungen eine Fehlerbeschreibung und/oder Dokumente mit Montageanweisungen und/oder Einstellanweisungen und/oder erforderliche Arbeitswerte.

Dadurch können Ausfallzeiten und Reparaturzeiten eingeschätzt und geplant werden. Es ist auch möglich, automatisiert ein Reparaturangebot für den Inhaber des Flurförderzeugs zu erzeugen und ein Reparaturzeitfenster vorzuschlagen bzw. zu vereinbaren.

In günstiger Ausgestaltung des erfindungsgemäßen Verfahrens sind die Datenübertragungsmittel drahtlose Datenverbindungen und erfolgt die Datenübertragung über GPRS, UMTS, LTE , Bluetooth oder WLAN.

Dadurch kann sicher und zuverlässig eine Datenübertragung erfolgen, ohne dass eine feste Kabelverbindung zu dem Flurförderzeug erforderlich ist. Dies ermöglicht beim Auftreten eines Fehlers das sofortige Senden eines Fehlercodes und das Starten eines Reparaturauftrags.

Die Datenübertragungsmittel können eine Verbindung zu einem zentralen Servicerechner über das Internet herstellen.

Vorteilhaft stellt der Servicerechner einen auf weiteren Rechnern oder dem Servicerechner selbst darstellbaren Arbeitsablauf zur Verfügung, insbesondere einen als Anwendung im Internet darstellbaren Arbeitsablauf.

In einer weiteren Ausgestaltung des erfindungsgemäßen Verfahrens übermittelt der zentrale Servicerechner an ein Empfangsgerät für einen Servicetechniker Handlungsanweisungen und/oder Informationen über benötigte Ersatzteile als Nachrichten, insbesondere als E-Mail oder SMS.

An den Servicetechniker können dabei Handlungsanweisungen mit Eintrittswahrscheinlichkeiten für bestimmte Ereignisse, wie Fehler, bei der Reparatur zu beachtende und auftretende Probleme, sowie sonstige weiterführende Hinweise übermittelt werden. Ebenso können die Ersatzteilvorschläge an den Servicetechniker übermittelt werden.

Vorteilhaft kann der zentrale Servicerechner über die Datenübertragungsmittel Daten an den Steuerungsrechner des Flurförderzeugs übertragen.

Erfindungsgemäß wählt der Servicerechner anhand einer übertragenen oder ermittelten Seriennummer des Flurförderzeugs ein zugehöriges Ersatzteilverzeichnis.

Dadurch ist es vorteilhaft möglich, zu einem Flurförderzeug stets den gültigen Ersatzteilkatalog auszuwählen und die entsprechenden Bestelldaten für ein erforderliches Ersatzteil zu ermitteln. Zudem wird hierdurch ermöglicht, dass stets die zurzeit aktuellen Handlungsanweisungen zur Verfügung zu stellen.

Die Aufgabe wird auch gelöst durch ein System umfassend ein Flurförderzeug und einen zentralen Servicerechner, wobei das Flurförderzeug mit einem Steuerungsrechner, der über Datenübertragungsmittel an einen zentralen Servicerechner Fehlercodes über erfasste Fehlfunktionen des Flurförderzeugs übertragen kann zur Erzeugung von Handlungsanweisungen für den Service und die Reparatur des Flurförderzeugs und/oder Informationen über benötigte Ersatzteile, wobei die Handlungsanweisungen auf dem zentralen Servicerechner aus Erfahrungen mit vorhergehenden Reparaturen, von Servicetechniker erstellten Berichten aktualisiert werden.

Auch bei dem erfindungsgemäßen System können vorteilhaft die Fehlercodes auf dem zentralen Servicerechner analysiert werden und indem ein erforderliches Ersatzteil bestimmt wird bzw. eine Auswahl aus mehreren potentiellen möglichen erforderlichen Ersatzteilen durchgeführt wird, werden unnötige Fahrten eines Servicetechnikers vermieden, da der Servicetechniker dann im Regelfall alle erforderlichen Teile bereits bei der ersten Anfahrt für eine Reparatur mit sich führt. Dabei kann die Auswahl der Ersatzteile auf dem zentralen Servicerechner anhand von Datenbanken erfolgen bzw. Verzeichnissen, die in einer Software hinterlegt sind und automatisch erfolgen. Dadurch ist es auch leicht möglich, die Software auf dem zentralen Servicerechner zu pflegen und stets aktuell zu halten, so dass immer die aktuellen Ersatzteile ausgewählt werden. Ebenso werden vorteilhaft für den Service und die Reparatur des Flurförderzeugs von der Software auf dem zentralen Servicerechner Handlungsanweisungen, insbesondere die den Fehlercodes zugeordneten Teile des Reparaturhandbuchs, zur Verfügung gestellt. Diese lassen sich stets aktuell halten und bei jeder Reparatur wird nach den neuesten Handlungsanweisungen vorgegangen. Insbesondere ist es möglich, aus Erfahrungen mit vorhergehenden Reparaturen, von Servicetechniker erstellten Berichten usw. die Handlungsanweisungen auf dem zentralen Servicerechner zu aktualisieren im Sinne eines Expertensystems. Dies kann beispielsweise geschehen, indem in vorgegebenen elektronischen Formularen, Serviceberichten oder auf sonstige vorgegebene Art und Weise Rückmeldungen durch die Servicetechniker erfolgen und von der Software verarbeitet werden, insbesondere in einem Regelwerk für die Beurteilung der Fehlercodes berücksichtigt werden. Dadurch entsteht ein selbstlernendes System. Insbesondere ist es vorteilhaft, die Fehlercodes durch die Software auf dem zentralen Servicerechner automatisiert zu verarbeiten. Dadurch stehen diese nicht nur als lesbare Daten für einen Benutzer an dem zentralen Servicerechner zur Verfügung, sondern starten automatisiert einen Arbeitsablaufablauf oder Workflow. Die Analyse der Fehlercodes erfolgt dabei mit regelbasierten Programmen auf dem zentralen Servicerechner. Dabei können Lösungsbäume mit Eintrittswahrscheinlichkeiten gebildet werden zur Beurteilung, welche Regeln auf einen Fehlercode zutreffen. Vorteilhaft können durch die Erfindung die Betriebskosten gesenkt werden, insbesondere indem unnötige Leerfahrten zur Ermittlung der Fehlerursache von Servicetechniker vermieden werden. Zudem wird durch die automatische Fehlermeldung und die erzeugten Handlungsanweisungen die Verfügbarkeit des Flurförderzeugs durch eine schnelle und zielgerichtete Reparatur erhöht. Indem der gesamte Ablauf von der Meldung eines Fehlercodes über einen Arbeitsablauf gesteuert wird, der dritten Personen, insbesondere allen Beteiligten, als Darstellung zur Verfügung gestellt werden kann, ist es auch vorteilhaft auf einfache Weise möglich, die Verfügbarkeit des Flurförderzeugs bzw. die Ausfallzeiten bis zur Erledigungsmeldung einer Reparatur zu erfassen. Die Darstellung an dritte Personen kann zusätzlich oder durch Statusmeldungen erfolgen. Durch das vollautomatische Starten bzw. die vollautomatische Überwachung des gesamten Vorgangs in dem zentralen Servicerechner ist vorteilhaft auch in einem Mehrschichtbetrieb der Flurförderzeuge ohne erheblichen Mehraufwand ein schneller Serviceeinsatz möglich, da ein Reparaturauftrag zum Beispiel auch beispielsweise während einer Nachtzeit gestartet werden kann, ohne dass ein entsprechender Bereitschaftsdienst auf der Seite des Serviceteams eingerichtet sein muss. Durch die Rückmeldungen mittels von Serviceberichten nach erfolgter Reparatur und einen Abgleich mit den Handlungsanweisungen, die die Software auf dem zentralen Servicerechner zur Verfügung stellt, ist es auch möglich, durch einen Soll-Ist-Vergleich die Qualität der Handlungsanweisungen zu überprüfen und zu verbessern.

Vorteilhaft kann der Steuerungsrechner zusätzlich Messwerte des Flurförderzeugs erfassen und an den Servicerechner übertragen, insbesondere mit den Fehlercodes zusammenhängende Messwerte und/oder Messwerte von den Fehlercodes zugeordneten Fahrzeugkomponenten.

Durch die Kombination von Fehlercodes mit korrespondierenden Messwerten ist eine genauere Beurteilung anhand von Regeln möglich und kann insbesondere ein lernendes Expertensystem generiert werden.

Die Handlungsanweisungen können eine Fehlerbeschreibung und/oder Dokumente mit Montageanweisungen und/oder Einstellanweisungen und/oder erforderliche Arbeitswerte umfassen.

Dadurch können Ausfallzeiten und Reparaturzeiten eingeschätzt werden. Es ist auch möglich, automatisiert ein Reparaturangebot für den Inhaber des Flurförderzeugs zu erzeugen und ein Reparaturzeitfenster vorzuschlagen.

Vorteilhaft können die Datenübertragungsmittel drahtlose Datenverbindungen sein und die Datenübertragung erfolgt über GPRS, UMTS, LTE, Bluetooth oder WLAN.

Dadurch kann sicher und zuverlässig eine Datenübertragung erfolgen, ohne dass eine feste Kabelverbindung zu dem Flurförderzeug erforderlich ist. Dies ermöglicht beim Auftreten eines Fehlers das sofortige Senden eines Fehlercodes und das Starten eines Reparaturauftrags.

In einer vorteilhaften Ausgestaltung des erfindungsgemäßen Flurförderzeugs umfassen die Datenübertragungsmittel eine Verbindung zu einem zentralen Servicerechner über das Internet.

In einer vorteilhaften Ausgestaltung des Servicerechners des erfindungsgemäßen Systems kann ein auf weiteren Rechnern oder dem Servicerechner selbst darstellbarer Arbeitsablauf zur Verfügung stehen, insbesondere ein als Anwendung im Internet darstellbarer Arbeitsablauf.

Vorteilhaft kann der zentrale Servicerechner an ein Empfangsgerät für einen Servicetechniker Handlungsanweisungen und/oder Informationen über benötigte Ersatzteile als Nachrichten übermitteln, insbesondere als E-Mail oder SMS.

An den Servicetechniker können dabei Handlungsanweisungen mit Eintrittswahrscheinlichkeiten für bestimmte Ereignisse, wie Fehler, bei der Reparatur zu beachtende und auftretende Probleme, sowie sonstige weiterführende Hinweise übermittelt werden. Ebenso können die Ersatzteilvorschläge an den Servicetechniker übermittelt werden. Das Empfangsgerät des Servicetechnikers kann dabei ein Notebook, aber auch ein Smartphone oder ein sonstiges mit Netzwerken verwendbares Endgerät sein.

Über die Datenübertragungsmittel können Daten an den Steuerungsrechner des Flurförderzeugs übertragen werden.

Erfindungsgemäß werden anhand einer übertragenen oder ermittelten Seriennummer dem Flurförderzeug ein Ersatzteilverzeichnis ausgewählt.

Meldungen des Steuerungsrechners des Flurförderzeugs können zu einem speziellen Datenbankserver übertragen werden. Ein Rechner in einem Netzwerk, zum Beispiel der zentrale Servicerechner, kann als Applikationsserver dienen, auf dem eine Webapplikation für die gesamte Prozesssteuerung sorgt. Dadurch wird es leicht möglich, Informationen weiteren Personen zur Verfügung zu stellen, die auf diese Webapplikation ebenfalls Zugriff haben.

Der zentrale Servicerechner kann über Schnittstellen zu Warenwirtschaftssystemen, beispielsweise eine SAP - Schnittstelle, Serviceaufträge, Ersatzteilbestellungen und Dokumente für den abzuarbeitenden Reparaturauftrag erzeugen.

Vorteilhaft wird dadurch die Verfügbarkeit des Flurförderzeugs erhöht, weil nach einer automatischen Fehlererkennung und Fehlermeldung sofort ein Reparaturvorgang gestartet werden kann. Insbesondere bei einem Flurförderzeug, ist dies ist von besonderem Vorteil, da bei solchen Fahrzeugen ein Ausfall sich sehr schnell auf die Produktionsvorgänge eines Unternehmens auswirken kann. Wenn Flurförderzeuge, wie beispielsweise bei großen Flotten aus Flurförderzeugen in Industrieunternehmen, in mehreren Schichten eingesetzt werden, kann durch die Erfindung in einem Fehlerfall automatisch reagiert werden. Es kann ein Reparatureinsatz automatisch gestartet werden einschließlich Ersatzteilbestellungen und Erzeugung von Handlungsanweisungen für Reparaturpersonal sowie einer automatisierten Ermittlung von Reparaturzeiten sowohl in Bezug auf die Dauer wie auch den Zeitpunkt.

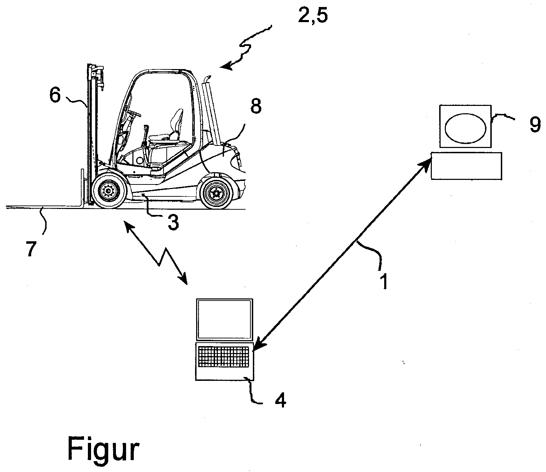

Weitere Vorteile und Einzelheiten der Erfindung werden anhand des in der Figur dargestellten Ausführungsbeispiels näher erläutert. Hierbei zeigt die Figur eine schematische Darstellung der Verbindung eines Flurförderzeugs mit einem zentralen Servicerechner.

Ein Flurförderzeug 2 weist einen Sender 3 auf, mit dem eine durch einen Pfeil angedeutete Verbindung zu einem Rechner 4 im Einsatzbereich des Flurförderzeugs 2 besteht. Das Flurförderzeug 2 ist beispielsweise ein Gabelstapler 5, der ein Hubgerüst 6 mit an diesem höhenveränderbar geführter Lastgabel 7 aufweist. Ein Gegengewicht 8 gleicht ein Lastmoment eines nicht dargestellten Lastgewichts auf der Lastgabel 7 aus.

Der Rechner 4 steht über das Internet 1, das durch den Doppelpfeil angedeutet wird, mit einem zentralen Servicerechner 9 bei einem Serviceunternehmen in Verbindung. Ein nicht dargestellter Steuerungsrechner des Flurförderzeugen 2, der die Funktionen des Fahrzeugs steuert, erfasst Fehler und erzeugt entsprechende Fehlercodes. Zusätzlich werden zu den Fehlercodes gehörige Messwerte, wie durch Sensoren erfassbare Messwerte von Bauteilen, für die ein Fehler gemeldet wurde, aufgenommen. Sowohl die Messwerte wie auch die erzeugte Fehlercodes werden über den Sender 3 an den Rechner 4 übertragen, der beispielsweise auf dem Firmengelände angeordnet ist, auf dem das Flurförderzeugen 2 eingesetzt wird.

Der Rechner 4 gibt die Daten über das Internet 1 an den zentralen Servicerechner 9 weiter. Eine Software auf dem zentralen Servicerechner 9 bestimmt anhand einer abgelegten Datenbank, welche Handlungsschritte für die Beseitigung der aus der Kombination der Messwerte und des Fehlercodes ermittelten Fehlers vorzunehmen sind und welche Ersatzteile benötigt werden. Dabei erfolgt eine Bewertung anhand von Wahrscheinlichkeiten, dass bei der vorliegenden Fehlermeldung ein bestimmtes Ersatzteil benötigt wird oder alternativ ein anderes Ersatzteil. Ebenfalls werden zu beiden Alternativen die entsprechenden Reparaturanweisungen zur Verfügung gestellt. Dabei erfolgt eine Auswahl der Ersatzteile anhand einer aktuellen Ersatzteilliste, die aufgrund der ebenfalls übertragenen oder ermittelten Seriennummer des Flurförderzeugs 2 bestimmt wird. Schließlich wird von dem Servicerechner 9 ein Reparaturauftrag erzeugt und initiiert. Dieser für die ermittelte wahrscheinlichste Fehlerursache erzeugte Reparaturauftrag wird mit den Handlungsanweisungen und gegebenenfalls Reparaturhinweisen, den Ersatzteilvorschlägen zusammen mit der ermittelten Eintrittswahrscheinlichkeit ebenfalls an einen Servicetechniker übermittelt. Gleichzeitig werden über eine Webapplikation dem Inhaber bzw. Anwender des Flurförderzeugs 2 Informationen über die Reparaturzeitdauer und einen möglichen Reparaturtermin sowie gegebenenfalls die entstehenden Kosten zur Verfügung gestellt, die von dem zentralen Servicerechner 9 berechnet werden.

Der Servicerechner 9 kann hierbei auf Basis regelbasierter Algorithmen die dem Fehlercode und gegebenenfalls den Messwerten zu Grunde liegende wahrscheinlichste Fehlerursache ermitteln.

Mit der ermittelten wahrscheinlichsten Fehlerursache kann der Servicerechner 9 weiterhin eine der Fehlerursache korrespondierende Ausfallzeit des Flurförderzeugs 2 ermitteln und zur Verfügung stellen.

Der Servicerechner 9 initiiert weiterhin für die mit der ermittelten wahrscheinlichsten Fehlerursache korrespondierenden Ersatzeile eine Auslagerung dieser Ersatzteile aus einem Ersatzteillager.

## Patentansprüche

1. Verfahren zur Aktualisierung von Handlungsanweisungen für den Service und die Reparatur eines Flurförderzeugs (2), wobei das Flurförderzeug (2) einen Steuerungsrechner aufweist, der über Datenübertragungsmittel an einen zentralen Servicerechner (9) Daten übertragen kann, mit den Schritten:
- Erfassen von Fehlfunktionen des Flurförderzeugs (2) durch den Steuerungsrechner,
- Erzeugen von den Fehlfunktionen entsprechenden Fehlercodes durch den Steuerungsrechner,
- Übertragen der Fehlercodes über die Datenübertragungsmittel an den zentralen Servicerechner (9),
- Erzeugen von Handlungsanweisungen für den Service und die Reparatur des Flurförderzeugs (2) und/oder Informationen über benötigte Ersatzteile durch den zentralen Servicerechner (9), wobei für den Service und die Reparatur des Flurförderzeugs (2) von der Software auf dem zentralen Servicerechner (9) die Handlungsanweisungen zur Verfügung gestellt werden,
**gekennzeichnet durch**
- Aktualisieren der Handlungsanweisungen auf dem zentralen Servicerechner (9) aus Erfahrungen mit vorhergehenden Reparaturen, und von Servicetechnikern erstellten Berichten, wobei in vorgegebenen elektronischen Formularen, Serviceberichten oder auf sonstige Art und Weise Rückmeldungen durch die Servicetechniker erfolgen und durch die Software auf dem zentralen Servicerechner (9) automatisiert verarbeitet werden,
wobei über eine Webapplikation dem Anwender des Flurförderzeugs (2) Informationen über eine Reparaturzeitdauer und einen möglichen Reparaturtermin zur Verfügung gestellt werden,
wobei der Servicerechner (9) anhand einer übertragenen oder ermittelten Seriennummer des Flurförderzeugs (2) ein zugehöriges Ersatzteilverzeichnis auswählt, und
wobei der Servicerechner (9) für mit einer ermittelten wahrscheinlichsten Fehlerursache korrespondierende Ersatzteile eine Auslagerung dieser Ersatzteile aus einem Ersatzteillager initiiert.

2. Verfahren nach Anspruch 1,
**dadurch gekennzeichnet,**
**dass** der Steuerungsrechner zusätzlich Messwerte des Flurförderzeugs (2) erfasst und an den Servicerechner (9) überträgt.

3. Verfahren nach Anspruch 1 oder 2,
**dadurch gekennzeichnet,**
**dass** die Handlungsanweisungen eine Fehlerbeschreibung und/oder Dokumente mit Montageanweisungen und/oder Einstellanweisungen und/oder erforderliche Arbeitswerte umfassen.

4. Verfahren nach einem der Ansprüche 1 bis 3,
**dadurch gekennzeichnet,**
**dass** die Datenübertragungsmittel drahtlose Datenverbindungen sind und die Datenübertragung über GPRS, UMTS, LTE , Bluetooth oder WLAN erfolgt.

5. Verfahren nach einem der Ansprüche 1 bis 4,
**dadurch gekennzeichnet,**
**dass** die Datenübertragungsmittel eine Verbindung zu einem zentralen Servicerechner (9) über das Internet (1) herstellen.

6. Verfahren nach einem der Ansprüche 1 bis 5,
**dadurch gekennzeichnet,**
**dass** der Servicerechner (9) einen auf weiteren Rechnern oder dem Servicerechner (9) selbst darstellbaren Arbeitsablauf zur Verfügung stellt.

7. Verfahren nach einem der Ansprüche 1 bis 6,
**dadurch gekennzeichnet,**
**dass** der zentrale Servicerechner (9) an ein Empfangsgerät für einen Servicetechniker Handlungsanweisungen und/oder Informationen über benötigte Ersatzteile als Nachrichten übermittelt.

8. Verfahren nach einem der Ansprüche 1 bis 7,
**dadurch gekennzeichnet,**
**dass** der zentrale Servicerechner (9) über die Datenübertragungsmittel Daten an den Steuerungsrechner des Flurförderzeugs (2) übertragen kann.

9. System umfassend ein Flurförderzeug (2) und einen zentralen Servicerechner (9), wobei das Flurförderzeug mit einem Steuerungsrechner (9), der über Datenübertragungsmittel an einen zentralen Servicerechner (9) Fehlercodes über erfasste Fehlfunktionen des Flurförderzeugs (2) übertragen kann zur Erzeugung von Handlungsanweisungen für den Service und die Reparatur des Flurförderzeugs und/oder Informationen über benötigte Ersatzteile durch den zentralen Steuerungsrechner (9), wobei für den Service und die Reparatur des Flurförderzeugs (2) von der Software auf dem zentralen Servicerechner (9) die Handlungsanweisungen zur Verfügung gestellt werden, **dadurch gekennzeichnet, dass** die Handlungsanweisungen auf dem zentralen Servicerechner (9) aus Erfahrungen mit vorhergehenden Reparaturen, von Servicetechnikern erstellten Berichten aktualisiert werden, wobei in vorgegebenen elektronischen Formularen, Serviceberichten oder auf sonstige Art und Weise Rückmeldungen durch die Servicetechniker erfolgen und durch die Software auf dem zentralen Servicerechner (9) automatisiert verarbeitet werden, wobei über eine Webapplikation dem Anwender des Flurförderzeugs (2) Informationen über eine Reparaturzeitdauer und einen möglichen Reparaturtermin zur Verfügung gestellt werden, wobei anhand einer übertragenen oder ermittelten Seriennummer des Flurförderzeugs (2) ein Ersatzteilverzeichnis ausgewählt wird, und wobei der Servicerechner (9) für mit einer ermittelten wahrscheinlichsten Fehlerursache korrespondierende Ersatzteile eine Auslagerung dieser Ersatzteile aus einem Ersatzteillager initiiert.

10. Flurförderzeug eines Systems nach Anspruch 9,
**dadurch gekennzeichnet,**
**dass** der Steuerungsrechner zusätzlich Messwerte des Flurförderzeugs(2) erfassen und an den Servicerechner (9) übertragen kann.

11. Flurförderzeug eines Systems nach Anspruch 9 oder 10,
**dadurch gekennzeichnet,**
**dass** die Handlungsanweisungen eine Fehlerbeschreibung und/oder Dokumente mit Montageanweisungen und/oder Einstellanweisungen und/oder erforderliche Arbeitswerte umfassen.

12. Flurförderzeug eines Systems nach einem der Ansprüche 9 bis 11,
**dadurch gekennzeichnet,**
**dass** die Datenübertragungsmittel drahtlose Datenverbindungen sind und die Datenübertragung über GPRS, UMTS, LTE , Bluetooth oder WLAN erfolgt.

13. Flurförderzeug eines Systems nach einem der Ansprüche 9 bis 12,
**dadurch gekennzeichnet,**
**dass** die Datenübertragungsmittel eine Verbindung zu einem zentralen Servicerechner (9) über das Internet (1) umfassen.

14. Servicerechner eines Systems nach einem der Ansprüche 9 bis 13,
**dadurch gekennzeichnet,**
**dass** ein auf weiteren Rechnern oder dem Servicerechner (9) selbst darstellbarer Arbeitsablauf zur Verfügung steht.

15. Servicerechner eines Systems nach einem der Ansprüche 9 bis 14,
**dadurch gekennzeichnet,**
**dass** der zentrale Servicerechner (9) an ein Empfangsgerät für einen Servicetechniker Handlungsanweisungen und/oder Informationen über benötigte Ersatzteile als Nachrichten übermitteln kann.

16. Servicerechner eines Systems nach einem der Ansprüche 9 bis 15,
**dadurch gekennzeichnet,**
**dass** über die Datenübertragungsmittel Daten an den Steuerungsrechner des Flurförderzeugs (2) übertragen werden können.

## Claims

1. Method for updating instructions for servicing and repairing an industrial truck (2), wherein the industrial truck (2) has a control computer which can transmit data to a central service computer (9) via data transmission means, with the steps of:
- detecting malfunctions of the industrial truck (2) by means of the control computer,
- generating fault codes corresponding to the malfunctions by means of the control computer,
- transmitting the fault codes to the central service computer (9) via the data transmission means,
- generating instructions for servicing and repairing the industrial truck (2) and/or information relating to required spare parts by means of the central service computer (9), wherein the instructions for servicing and repairing the industrial truck (2) are provided by the software on the central service computer (9), **characterized by**
- updating the instructions on the central service computer (9) from experience with previous repairs, and reports produced by service technicians, wherein feedback is provided by the service technicians in predefined electronic forms, service reports or in any other way and is processed automatically by the software on the central service computer (9),
wherein information relating to a repair time and a possible repair date is made available to the user of the industrial truck (2) via a web application,
wherein the service computer (9) selects an associated spare parts directory based on a transmitted or determined serial number of the industrial truck (2), and wherein, for spare parts corresponding to a determined most probable cause of the fault, the service computer (9) initiates a removal of these spare parts from a spare parts warehouse.

2. Method according to Claim 1,
**characterized in**
**that** the control computer additionally acquires measured values from the industrial truck (2) and transmits them to the service computer (9).

3. Method according to Claim 1 or 2,
**characterized in**
**that** the instructions include a description of the fault and/or documents with assembly instructions and/or adjustment instructions and/or required working values.

4. Method according to one of Claims 1 to 3,
**characterized in**
**that** the data transmission means are wireless data connections and data are transmitted via GPRS, UMTS, LTE, Bluetooth or WLAN.

5. Method according to one of Claims 1 to 4,
**characterized in**
**that** the data transmission means establish a connection to a central service computer (9) via the Internet (1).

6. Method according to one of Claims 1 to 5,
**characterized in**
**that** the service computer (9) provides a workflow that can be displayed on further computers or the service computer (9) itself.

7. Method according to one of Claims 1 to 6,
**characterized in**
**that** the central service computer (9) transmits instructions and/or information relating to required spare parts as messages to a receiving device for a service technician.

8. Method according to one of Claims 1 to 7,
**characterized in**
**that** the central service computer (9) can transmit data to the control computer of the industrial truck (2) via the data transmission means.

9. System comprising an industrial truck (2) and a central service computer (9), wherein the industrial truck with a control computer which can transmit fault codes relating to detected malfunctions of the industrial truck (2) to a central service computer (9) via data transmission means for the purpose of generating instructions for servicing and repairing the industrial truck and/or information relating to required spare parts by means of the central service computer (9), wherein the instructions for servicing and repairing the industrial truck (2) are provided by the software on the central service computer (9), **characterized in that** the instructions on the central service computer (9) are updated from experience with previous repairs, and reports produced by service technicians, wherein feedback is provided by the service technicians in predefined electronic forms, service reports or in any other way and is processed automatically by the software on the central service computer (9), wherein information relating to a repair time and a possible repair date is made available to the user of the industrial truck (2) via a web application, wherein a spare parts directory is selected based on a transmitted or determined serial number of the industrial truck (2), and wherein, for spare parts corresponding to a determined most probable cause of the fault, the service computer (9) initiates a removal of these spare parts from a spare parts warehouse.

10. Industrial truck of a system according to Claim 9,
**characterized in**
**that** the control computer can additionally acquire measured values from the industrial truck (2) and can transmit them to the service computer (9).

11. Industrial truck of a system according to Claim 9 or 10,
**characterized in**
**that** the instructions include a description of the fault and/or documents with assembly instructions and/or adjustment instructions and/or required working values.

12. Industrial truck of a system according to one of Claims 9 to 11,
**characterized in**
**that** the data transmission means are wireless data connections and data are transmitted via GPRS, UMTS, LTE, Bluetooth or WLAN.

13. Industrial truck of a system according to one of Claims 9 to 12,
**characterized in**
**that** the data transmission means include a connection to a central service computer (9) via the Internet (1).

14. Service computer of a system according to one of Claims 9 to 13,
**characterized in**
**that** a workflow that can be displayed on further computers or the service computer (9) itself is available.

15. Service computer of a system according to one of Claims 9 to 14,
**characterized in**
**that** the central service computer (9) can transmit instructions and/or information relating to required spare parts as messages to a receiving device for a service technician.

16. Service computer of a system according to one of Claims 9 to 15,
**characterized in**
**that** data can be transmitted to the control computer of the industrial truck (2) via the data transmission means.

## Revendications

1. Procédé permettant de mettre à jour des instructions de manipulation pour la maintenance et la réparation d'un chariot de manutention (2), dans lequel le chariot de manutention (2) présente un ordinateur de commande qui peut transmettre des données à un ordinateur de maintenance central (9) par des moyens de transmission de données, comprenant les étapes consistant à :
- détecter des dysfonctionnements du chariot de manutention (2) par l'ordinateur de commande,
- générer par l'ordinateur de commande des codes d'erreur correspondant aux dysfonctionnements,
- transmettre les codes d'erreur par des moyens de transmission de données à l'ordinateur de maintenance central (9),
- générer par l'ordinateur de maintenance central (9) des instructions de manipulation pour la maintenance et la réparation du chariot de manutention (2) et/ou des informations concernant des pièces de rechange nécessaires, dans lequel les instructions de manipulation sont mises à disposition pour la maintenance et la réparation du chariot de manutention (2) par le logiciel sur l'ordinateur de maintenance central (9),
**caractérisé par** l'étape consistant à
- mettre à jour les instructions de manipulation sur l'ordinateur de maintenance central (9) selon des expériences liées à des réparations précédentes, et des rapports établis par des techniciens de maintenance, dans lequel, dans des formulaires électroniques prédéfinis, des rapports de maintenance ou d'une autre manière, des retours sont effectués par les techniciens de maintenance et traités de manière automatisée par le logiciel sur l'ordinateur de maintenance central (9),
dans lequel des informations concernant un délai de réparation et une date de réparation possible sont mises à la disposition de l'utilisateur du chariot de manutention (2) par l'intermédiaire d'une application web,
dans lequel l'ordinateur de maintenance (9) sélectionne une liste de pièces de rechange associée à l'aide d'un numéro de série transmis ou établi du chariot de manutention (2), et
dans lequel l'ordinateur de maintenance (9) initie une sortie de ces pièces de rechange de l'entrepôt de pièces de rechange pour des pièces de rechange correspondant à une cause de dysfonctionnement la plus probable établie.

2. Procédé selon la revendication 1,
**caractérisé**
**en ce que** l'ordinateur de commande détecte de plus des valeurs de mesure du chariot de manutention (2) et les transmet à l'ordinateur de maintenance (9).

3. Procédé selon la revendication 1 ou 2,
**caractérisé**
**en ce que** les instructions de manipulation comprennent une description des erreurs et/ou des documents avec des instructions de montage et/ou des instructions de réglage et/ou des valeurs de travail nécessaires.

4. Procédé selon l'une quelconque des revendications 1 à 3,
**caractérisé**
**en ce que** les moyens de transmission de données sont des liaisons de données sans fil et la transmission de données est effectuée par GPRS, UMTS, LTE, Bluetooth ou Wi-Fi.

5. Procédé selon l'une quelconque des revendications 1 à 4,
**caractérisé**
**en ce que** les moyens de transmission de données établissent une liaison avec un ordinateur de maintenance central (9) par internet (1).

6. Procédé selon l'une quelconque des revendications 1 à 5,
**caractérisé**
**en ce que** l'ordinateur de maintenance (9) met à disposition une séquence de travail pouvant être représentée sur d'autres ordinateurs ou sur l'ordinateur de maintenance (9) lui-même.

7. Procédé selon l'une quelconque des revendications 1 à 6,
**caractérisé**
**en ce que** l'ordinateur de maintenance central (9) communique sous forme de messages à un appareil récepteur pour un technicien de maintenance des instructions de manipulation et/ou des informations concernant des pièces de rechange nécessaires.

8. Procédé selon l'une quelconque des revendications 1 à 7,
**caractérisé**
**en ce que** l'ordinateur de maintenance central (9) peut transmettre par des moyens de transmission de données des données à l'ordinateur de commande du chariot de manutention (2).

9. Système, comprenant un chariot de manutention (2) et un ordinateur de maintenance central (9), dans lequel le chariot de manutention avec un ordinateur de commande qui peut transmettre par des moyens de transmission de données des codes d'erreur concernant des dysfonctionnements détectés du chariot de manutention (2) à un ordinateur de maintenance central (9) pour générer par l'ordinateur de commande central (9) des instructions de manipulation pour la maintenance et la réparation du chariot de manipulation et/ou des informations concernant des pièces de rechange nécessaires, dans lequel les instructions de manipulation sont mises à disposition pour la maintenance et la réparation du chariot de manutention (2) par le logiciel sur l'ordinateur de maintenance central (9), **caractérisé en ce que** les instructions de manipulation sur l'ordinateur de maintenance central (9) sont mises à jour selon des expériences de réparations précédentes et des rapports établis par des techniciens de maintenance, dans lequel, dans des formulaires électroniques prédéfinis, des rapports de maintenance ou d'une autre manière, des retours sont effectués par les techniciens de maintenance et traités de manière automatisée par le logiciel sur l'ordinateur de maintenance central (9), dans lequel des informations concernant un délai de réparation et une date de réparation possible sont mises à la disposition de l'utilisateur du chariot de manutention (2) par l'intermédiaire d'une application web, dans lequel une liste de pièces de rechange associée est sélectionnée à l'aide d'un numéro de série transmis ou établi du chariot de manutention (2), et dans lequel l'ordinateur de maintenance (9) initie une sortie de ces pièces de rechange de l'entrepôt de pièces de rechange pour des pièces de rechange correspondant à une cause de dysfonctionnement la plus probable établie.

10. Chariot de manutention d'un système selon la revendication 9,
**caractérisé**
**en ce que** l'ordinateur de commande peut détecter de plus des valeurs de mesure du chariot de manutention (2) et les transmettre à l'ordinateur de maintenance (9).

11. Chariot de manutention d'un système selon la revendication 9 ou 10,
**caractérisé**
**en ce que** les instructions de manipulation comprennent une description des erreurs et/ou des documents avec des instructions de montage et/ou des instructions de réglage et/ou des valeurs de travail nécessaires.

12. Chariot de manutention d'un système selon l'une quelconque des revendications 9 à 11,
**caractérisé**
**en ce que** les moyens de transmission de données sont des liaisons de données sans fil et la transmission de données est effectuée par GPRS, UMTS, LTE, Bluetooth ou Wi-Fi.

13. Chariot de manutention d'un système selon l'une quelconque des revendications 9 à 12,
**caractérisé**
**en ce que** les moyens de transmission de données comprennent une liaison avec un ordinateur de maintenance central (9) par internet (1).

14. Ordinateur de maintenance d'un système selon l'une quelconque des revendications 9 à 13,
**caractérisé**
**en ce qu'**une séquence de travail pouvant être représentée sur d'autres ordinateurs ou sur l'ordinateur de maintenance (9) lui-même est disponible.

15. Ordinateur de maintenance d'un système selon l'une quelconque des revendications 9 à 14,
**caractérisé**
**en ce que** l'ordinateur de maintenance central (9) peut communiquer sous forme de messages à un appareil récepteur pour un technicien de maintenance des instructions de manipulation et/ou des informations concernant des pièces de rechange nécessaires.

16. Ordinateur de maintenance d'un système selon l'une quelconque des revendications 9 à 15,
**caractérisé**
**en ce que** les moyens de transmission de données peuvent transmettre des données à l'ordinateur de commande du chariot de manutention (2).
